# EUROPÄISCHE PATENTSCHRIFT

(11) **EP 1 988 325 B1**
(45) Veröffentlichungstag und Bekanntmachung des Hinweises auf die Patenterteilung: **10.07.2013**
(21) Anmeldenummer: 08007013.9
(22) Anmeldetag: 09.04.2008
(51) Int. Cl.: F16N 11/10

(54) **Verfahren zum Betrieb eines Schmierstoffspenders**
Method for operating a lubricant dispenser
Procédé destiné au fonctionnement d'un distributeur de lubrifiant

(30) Priorität: 04.05.2007 DE 102007021376
(43) Veröffentlichungstag der Anmeldung: 05.11.2008
(73) Patentinhaber: Perma-Tec GmbH & Co. KG, 97717 Euerdorf (DE)
(72) Erfinder: Eisenbacher, Egon, 97753 Karlstadt (DE)
(74) Vertreter: Albrecht, Rainer Harald

(56) Entgegenhaltungen:
- US-A- 5 788 012

## Beschreibung

Die Erfindung betrifft ein Verfahren zum Betrieb eines Schmierstoffspenders, der ein Schmierstoffreservoir, einen an das Schmierstoffreservoir angrenzenden Gaserzeugungsbereich sowie einen in dem Gaserzeugungsbereich angeordneten Gaserzeuger aufweist, wobei der Gaserzeuger zur Steuerung der erzeugten Gasmenge über einen elektrischen Schaltkreis an eine Steuerelektronik angeschlossen ist und wobei die Gaserzeugungsrate von der über den Gaserzeuger und den elektrischen Schaltkreis fließenden Stromstärke abhängt.

Aus der Druckschrift DE 10 2005 035 452 A1 ist ein Schmierstoffspender bekannt, der ein Gehäuse mit einem Schmierstoffreservoir und einen Gaserzeugungsbereich aufweist. In dem Gaserzeugungsbereich sind eine Zink-Luft-Zelle als Gaserzeuger, ein elektrischer Schaltkreis mit einer Steuerelektronik und eine Lithiumbatterie als Spannungsquelle für die Steuerelektronik angeordnet. Die Zink-Luft-Zelle ist als stromerzeugende galvanische Zelle ausgebildet, wobei die über die galvanische Zelle fließende Stromstärke proportional zu der Gaserzeugungsrate ist. Durch die Steuerelektronik kann die Gaserzeugungsrate gesteuert werden. Durch die Steuerelektronik ist eine diskontinuierliche Schmierstoffabgabe möglich. Bezüglich der geförderten Schmierstoffmenge wird davon ausgegangen, dass die von dem Gaserzeuger abgegebene Gasmenge proportional zur abgegebenen Schmierstoffmenge ist. Insbesondere zu Beginn der Betriebszeit und nach fortschreitender Entleerung des Schmierstoffreservoirs werden in der Praxis jedoch deutliche Abweichungen von einer solchen Proportionalität beobachtet.

Aus der Druckschrift DE 37 22 708 ist ein Schmierstoffspender bekannt, der als Gaserzeugungselement einen Behälter mit einer Elektrolytflüssigkeit aufweist. Zur Gaserzeugung wird über Elektroden an die Elektrolytflüssigkeit eine Spannung angelegt, die von einer Batterie bereit gestellt ist. Auch hier ist die erzeugte Gasmenge proportional zu dem fließenden Strom. Da der Elektrolyseprozess in hohem Maße temperaturabhängig ist, wird bei einer vorgegebenen Differenzspannung an den Elektroden bei unterschiedlichen Temperaturen eine Änderung der Gaserzeugungsrate beobachtet. Aus diesem Grund ist eine Steuerelektronik vorgesehen, die nicht die an den Elektroden anliegende Spannung sondern den fließenden Strom konstant hält. Trotz des konstanten Stromes wird bei der Inbetriebnahme erst mit einer gewissen Verzögerung Schmiermittel abgegeben, wobei auch mit zunehmender Schmierdauer eine gewisse Abnahme der abgegebenen Schmierstoffmenge auftreten kann.

Aus der Druckschrift US 5 968 325 ist ein als galvanische Zelle ausgebildetes Gaserzeugungselement für einen Schmierstoffspender bekannt, welches sich durch eine geringe Temperaturabhängigkeit auszeichnet. Um eine gleichmäßige Abgabe von Schmiermittel zu gewährleisten, kann eine Steuerelektronik mit einem Druck- und/oder Temperatursensor vorgesehen sein. Die Bereitstellung und Anordnung des Sensors in dem Gehäuse führt zu einer Erhöhung der Herstellungskosten des Schmierstoffspenders, wobei auch eine entsprechend aufwendige Steuerelektronik zur Verarbeitung der Sensordaten erforderlich ist.

Bei einem aus US 5 788 012 bekannten Verfahren zum Betrieb eines Schmierstoffspenders kann die Stromstärke während einer Startphase sowie am Ende der Betriebszeit zum Zwecke einer vollständigen Restentleerung manuell auf einen maximalen Wert eingestellt werden, sodass sich eine maximale Gaserzeugungsrate einstellt.

Der vorliegenden Erfindung liegt die Aufgabe zugrunde, ein Verfahren zum Betrieb eines Schmierstoffspenders mit den eingangs beschriebenen Merkmalen anzugeben, welches auf einfache Weise eine gleichmäßige oder alternativ auch gewollt davon abweichende, bedarfsorientierte Abgabe von Schmiermittel ermöglicht.

Gegenstand der Erfindung und Lösung dieser Aufgabe ist ein Verfahren nach Anspruch 1.

Erfindungsgemäß erfolgt nach einer kurzen Startphase über die gesamte Betriebszeit des Schmierstoffspenders eine Abgabe von Schmiermittel, wobei während eines bezogen auf die gesamte Betriebszeit kürzeren Zeitraums zu Beginn der Betriebszeit und bei fortschreitender Entleerung anhand von vorbestimmten, festgelegten Steuerparametern die Gaserzeugungsrate von der Steuerelektronik erhöht wird. Die Erfindung beruht auf der Kenntnis, dass in der Praxis nicht über die gesamte Betriebszeit von einer linearen Abhängigkeit der pro Zeiteinheit abgegebenen Schmierstoffmenge von der Gaserzeugungsrate ausgegangen werden kann. Bei der Inbetriebnahme des Schmierstoffspenders hat sich üblicherweise in dem Gaserzeugungsbereich noch kein Druck aufgebaut, so dass das während der Startphase erzeugte Gas zunächst nur zur Vorkompression des Gaserzeugungsbereiches, des Schmierstoffreservoirs und etwaiger Totvolumina sowie zur Überwindung von Anfahrreibung im Fördersystem beiträgt. Um zu Beginn der Betriebsdauer eine Mangelschmierung zu vermeiden, wird die Gaserzeugungsrate gemäß der Erfindung anfänglich deutlich erhöht. Im Rahmen einer besonders bevorzugten Ausgestaltung ist vorgesehen, dass für die Dauer der Startphase von der Steuerelektronik die maximal zu erreichende Stromstärke eingestellt wird, so dass die Gaserzeugungsrate maximal ist. Der Betriebsdruck des Schmierstoffspenders wird in diesem Fall schnellstmöglich erreicht, so dass die Gefahr einer Mangelschmierung minimiert ist.

Zusätzlich zu der kurzfristigen Bereitstellung des Arbeitsdruckes durch eine Erhöhung der Stromstärke zu Beginn der Betriebszeit wird erfindungsgemäß bei fortschreitender Entleerung die über den Gaserzeuger und den elektrischen Schaltkreis fließende Stromstärke und damit auch die Gaserzeugungsrate kontinuierlich oder stufenweise erhöht. Bei der fortschreitenden Entleerung des Schmierstoffreservoirs nimmt gleichzeitig das mit Gas gefüllte Volumen zu, wobei mit der Zunahme des Volumens eine erhöhte Diffusion des von dem Gaserzeuger erzeugten Treibgases beobachtet wird. Der Anteil des Treibgases, der nicht zum Austreiben des Schmierstoffes beiträgt, sondern den Schmierstoffspender durch dessen Wände verlässt, nimmt also stetig zu. Durch die erfindungsgemäße kontinuierliche oder stufenweise Erhöhung der Gaserzeugungsrate können diese Verluste kompensiert werden. Diese Kompensation ist an die Schmierdauer, die Ausgestaltung des Gehäuses und die Diffusionsneigung des erzeugten Treibgases anzupassen. Besonders hohe Verluste ergeben sich bei Wasserstoff als Treibgas und einer langen Betriebsdauer.

Überraschenderweise ist das Verhalten von Schmierstoffspendern bei einer vorgegebenen Bauart reproduzierbar, so dass die Bereitstellung einer Schnellstartfunktion und die Kompensation der Gasverluste durch Diffusion durch im Voraus festgelegte Steuerparameter erfolgen kann. Die Anordnung von Sensoren und die aufwendige Verarbeitung von Sensormesswerten ist deshalb nicht erforderlich. Sofern bei der Inbetriebnahme des Schmierstoffspenders verschiedene Betriebsdauern auswählbar sind, ist zweckmäßigerweise für jede dieser Betriebsdauern ein Satz von Steuerparametern in einem Speicher der Steuerelektronik hinterlegt.

Der Gaserzeuger kann im Rahmen der Erfindung als stromerzeugende galvanische Zelle ausgebildet sein. Entsprechende Gaserzeuger sind beispielsweise aus den Druckschriften DE 35 32 335 A1 und US 5 968 325 bekannt. Bei einer solchen Ausgestaltung des Gaserzeugers kann die Steuerelektronik entweder von der galvanischen Zelle selbst oder einer zusätzlichen Spannungsquelle mit der erforderlichen Arbeitsspannung versorgt werden. Im Rahmen einer alternativen Ausgestaltung der Erfindung ist vorgesehen, dass als Gaserzeuger ein Behälter mit einer Elektrolytflüssigkeit vorgesehen ist, die über Elektroden an eine separate Spannungsquelle, vorzugsweise eine Batterie oder einen Akkumulator, angeschlossen ist. Der für die elektrochemische Zersetzung der Elektrolytflüssigkeit erforderliche Strom wird von der separaten Spannungsquelle zur Verfügung gestellt, wobei die Gaserzeugungsrate linear oder im Wesentlichen linear von der über den Gaserzeuger fließenden Stromstärke abhängt. Die Steuerelektronik ist im Rahmen der Erfindung vorzugsweise als Mikrocontroller ausgeführt. Die Stromregelung auf den jeweils erforderlichen Wert gemäß eingespeicherter Vorgabewerte kann zum Beispiel durch eine Puls-Weiten-Modulation mit dem Microcontroller dargestellt werden.

Die vorliegende Erfindung beruht im Kern auf der Erkenntnis, dass insbesondere zu Beginn und am Ende der Betriebszeit keine genau lineare Abhängigkeit der abgegebenen Schmierstoffmenge von der Gaserzeugungsrate vorliegt. Um zu Beginn der Betriebsdauer Totvolumina oder einer Anfahrreibung und zum Ende der Betriebsdauer erhöhte Verluste durch Diffusion zu kompensieren ist erfindungsgemäß vorgesehen die Gaserzeugungsrate anhand festgelegter Steuerparameter zu erhöhen. Dabei soll im Rahmen der Erfindung jedoch nicht ausgeschlossen sein, dass die Gaserzeugung zusätzlich teilweise unterbrochen oder zyklisch reduziert wird. So kann beispielsweise die Programmierung des Microcontrollers an einen Schichtbetrieb angepasst sein, wobei nur eine Gaserzeugung bei der Nutzung der geschmierten Vorrichtung vorgesehen ist. Entsprechend kann auch bei einer zyklisch unterschiedlichen Belastung der zu schmierenden Vorrichtung eine entsprechende Anpassung der Gaserzeugungsrate erfolgen. Die erfindungsgemäß vorgesehene Erhöhung der Gaserzeugungsrate anhand von vorausbestimmten, festgelegten Steuerparametern der Steuerelektronik bezieht sich in einem solchen Fall auf einen zeitlichen Mittelwert der Gaserzeugungsrate.

Die Erfindung wird im Folgenden anhand einer lediglich ein Ausführungsbeispiel darstellenden Zeichnung erläutert. Es zeigen schematisch:
- **Fig. 1**: den schematischen Aufbau eines Schmierstoffspenders,
- **Fig. 2a und 2b**: den zeitlichen Verlauf der Gaserzeugungsrate und des Druckes in dem Gaserzeugungsbereich eines Schmierstoffspenders sowie des Schmierstoffdurchflusses durch den Gehäuseauslass.

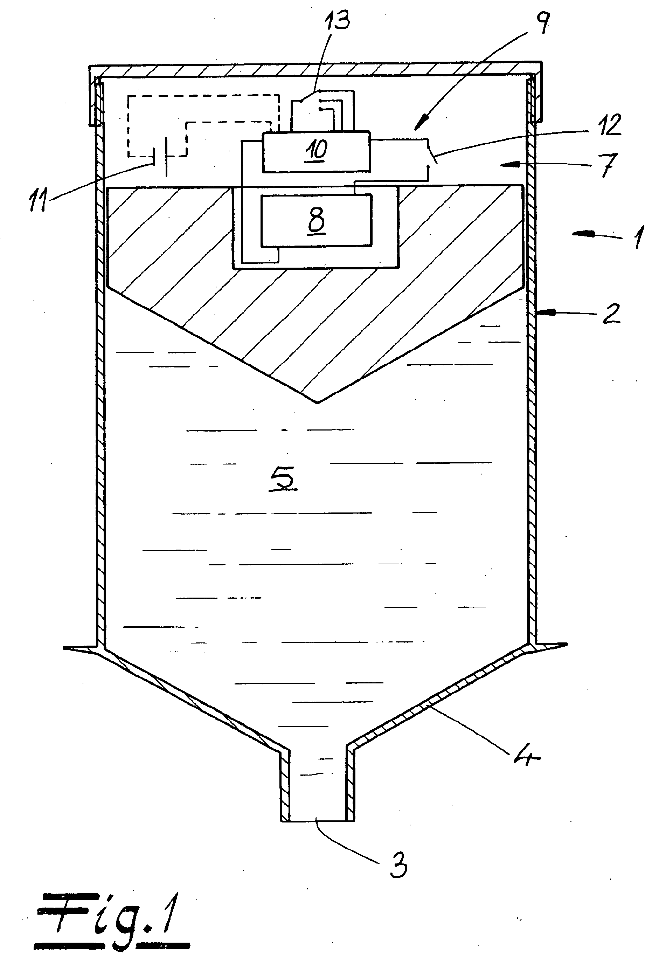

Fig. 1 zeigt eine mögliche Ausgestaltung eines Schmierstoffspenders 1. Der Schmierstoffspender 1 weist ein Gehäuse 2 mit einem Gehäuseauslass 3 an einem bodenseitigen Deckel 4 auf. Der Gehäuseauslass 3 mündet in ein Schmierstoffreservoir 5, wobei das Schmierstoffreservoir 5 mittels eines Kolbens 6 von einem Gaserzeugungsbereich 7 getrennt ist. In dem Gaserzeugungsbereich 7 ist ein Gaserzeuger 8 angeordnet, welcher in dem dargestellten Ausführungsbeispiel als stromerzeugende galvanische Zelle ausgebildet ist. Der Gaserzeuger 8 ist über einen elektrischen Schaltkreis 9 an eine als Mikrocontroller ausgebildete Steuerelektronik 10 angeschlossen, wobei die Spannungsversorgung des Mikrocontrollers durch die galvanische Zelle oder optional durch eine Batterie 11 als separate Spannungsquelle erfolgen kann. Zur Inbetriebnahme des Schmierstoffspenders 1 ist ein Ein- und Ausschalter 12 zu betätigen, wobei mit einem an den Mikrocontroller angeschlossenen Wählschalter 13 unterschiedliche Betriebszeiten ausgewählt werden können. Der Mikrocontroller weist einen Speicher auf, in dem vorausbestimmte Steuerparameter abgespeichert sind. Die Steuerparameter bewirken zusammen mit der Steuerelektronik 10 eine kontinuierliche Schmierstoffabgabe und über einen bezogen auf die gesamte Betriebszeit kürzeren Zeitraum zu Beginn der Betriebszeit und bei fortschreitender Entleerung des Schmierstoffreservoirs 5 eine Erhöhung der Gaserzeugungsrate G.

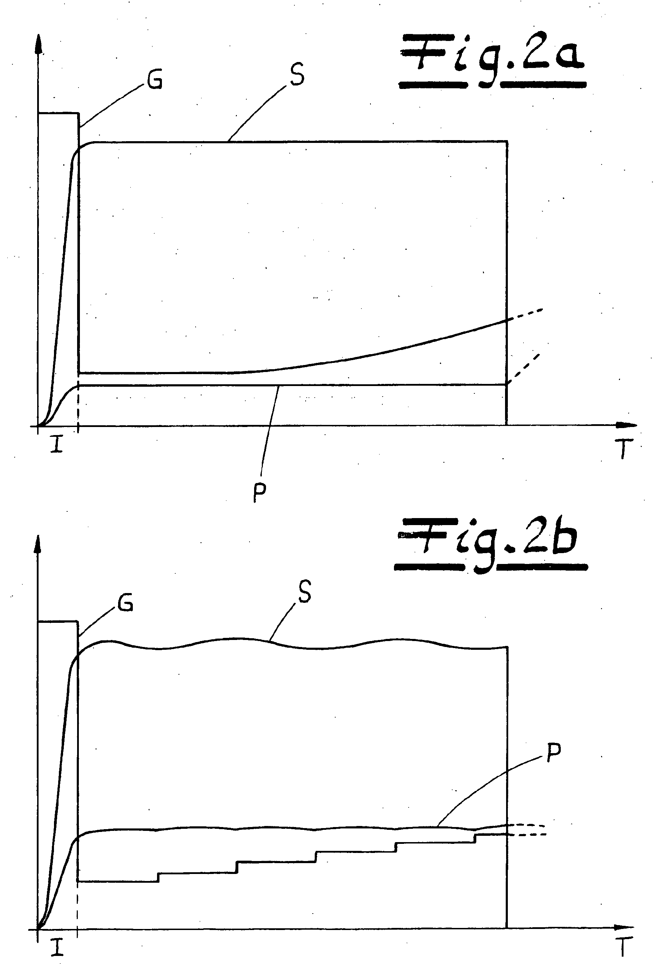

Die Fig. 2a und 2b zeigen exemplarisch den Verlauf der Gaserzeugungsrate G und des Druckes P in dem Gaserzeugungsbereich 7 sowie den Schmierstoffdurchfluss S durch den Gehäuseauslass 3 über die gesamte Betriebszeit. Der relative Verlauf der über den Gaserzeuger 8 und den elektrischen Schaltkreis 9 fließenden Stromstärke entspricht, die üblicherweise lineare Abhängigkeit vorausgesetzt, dem relativen Verlauf der Gaserzeugungsrate G. Für die Dauer einer kurzen Startphase 1, die zur Verdeutlichung zeitlich gestreckt dargestellt ist, wird aufgrund der vorausbestimmten Steuerparameter von dem Mikrocontroller die maximal zu erreichende Stromstärke eingestellt, so dass auch die Gaserzeugungsrate G maximal ist. Entsprechend ist ein schneller Anstieg des Druckes P in dem Gaserzeugungsbereich 7 zu beobachten, so dass eine Mangelschmierung zum Beginn der Betriebszeit vermieden werden kann. Mit zunehmender Entleerung des Schmierstoffreservoirs 5 nimmt auch das mit Gas gefüllte Volumen innerhalb des Gehäuses 2 zu, so dass ein erhöhter Verlust des Treibgases aufgrund von Diffusion durch die Gehäusewand auftritt. Zur Kompensation dieser Verluste wird erfindungsgemäß anhand der vorausbestimmten, festgelegten Steuerparameter die Gaserzeugungsrate G bei fortschreitender Entleerung des Schmierstoffreservoirs 5 kontinuierlich (Fig. 2a) oder stufenweise (Fig. 2b) erhöht. Die Erhöhung der Gaserzeugungsrate G kompensiert die Verluste des Treibgases durch Diffusion, so dass der Schmierstoffdurchfluss S durch den Gehäuseauslass 3 in etwa konstant gehalten werden kann.

## Patentansprüche

1. Verfahren zum Betrieb eines Schmierstoffspenders (1), der ein Gehäuse mit einem Schmierstoffreservoir (5) und einem Gehäuseauslass (3), einen an das Schmierstoffreservoir (5) angrenzenden Gaserzeugungsbereich (7) sowie einen in dem Gaserzeugungsbereich (7) angeordneten Gaserzeuger (8) aufweist, wobei der Gaserzeuger zur Steuerung der erzeugten Gasmenge über einen elektrischen Schaltkreis (9) an eine Steuerelektronik (10) angeschlossen ist, wobei die Gaserzeugungsrate (G) von der über den Gaserzeuger (8) und den elektrischen Schaltkreis (9) fließenden Stromstärke abhängt, wobei nach einer kurzen Startphase (I) über die gesamte Betriebszeit des Schmierstoffspenders (1) eine Abgabe von Schmiermittel erfolgt und bei fortschreitender Entleerung des Schmierstoffreservoirs (5) die Gaserzeugungsrate (G) von der Steuerelektronik (10) kontinuierlich oder stufenweise erhöht wird, wobei die Erhöhung der Gaserzeugungsrate (G) bei fortschreitender Entleerung des Schmierstoffreservoirs Verluste des Treibgases durch Diffusion kompensiert, sodass der Schmierstoffdurchfluss (S) durch den Gehäuseauslass (3) in etwa konstant gehalten werden kann, **dadurch gekennzeichnet, dass** während eines bezogen auf die gesamte Betriebszeit kürzeren Zeitraums zu Beginn der Betriebszeit und bei fortschreitender Entleerung des Schmierstoffreservoirs (5) anhand von vorausbestimmten, festgelegten Steuerparametern die über den Gaserzeuger (8) und den elektrischen Schaltkreis (9) fließende Stromstärke von der Steuerelektronik (10) erhöht wird.

2. Verfahren nach Anspruch 1, **dadurch gekennzeichnet, dass** zu Beginn der Schmierstoffabgabe für die Dauer der Startphase (I) von der Steuerelektronik (10) die maximal zu erreichende Stromstärke eingestellt wird, sodass die Gaserzeugungsrate (G) maximal ist.

3. Schmierstoffspender zur Durchführung des Verfahrens nach Anspruch 1 oder 2 mit einem Gehäuse (2), welches ein Schmierstoffreservoir (5) und einen an das Schmierstoffreservoir (5) angrenzenden Gaserzeugungsbereich (7) aufnimmt, mit einem in dem Gaserzeugungsbereich (7) angeordneten Gaserzeuger (8) und mit einer Steuerelektronik (10), an die der Gaserzeuger (8) zur Steuerung der erzeugten Gasmenge über einen elektrischen Schaltkreis (9) angeschlossen ist, wobei in einem Speicher der Steuerelektronik (10) vorausbestimmte Steuerparameter zur Steuerung der Schmierstoffabgabe über die Betriebszeit hinterlegt sind und wobei die Steuerparameter zusammen mit der Steuerelektronik (10) eine kontinuierliche Schmierstoffabgabe und über einen bezogen auf die gesamte Betriebszeit kürzeren Zeitraum zu Beginn der Betriebszeit und bei fortschreitender Entleerung des Schmierstoffreservoirs (5) eine Erhöhung der Gaserzeugungsrate (G) bewirken.

4. Schmierstoffspender nach Anspruch 3, wobei die Steuerelektronik (10) als Microcontroller ausgebildet ist.

5. Schmierstoffspender nach Anspruch 3 oder 4, wobei der Gaserzeuger (8) als stromerzeugende galvanische Zelle ausgebildet ist.

6. Schmierstoffspender nach Anspruch 5, wobei die Steuerelektronik (10) von der galvanischen Zelle mit der erforderlichen Arbeitsspannung versorgt wird.

7. Schmierstoffspender nach Anspruch 3 oder 4, wobei der Gaserzeuger (8) an eine separate Spannungsquelle, vorzugsweise eine Batterie (11) oder einen Akkumulator, angeschlossen ist.

## Claims

1. A method for operating a lubricant dispenser (1) having a housing with a lubricant reservoir (5) and a housing outlet (3), a gas-generation region (7) adjoining the lubricant reservoir (5), and a gas generator (8) arranged in the gas-generating region (7), wherein the gas generator is connected via an electrical circuit (9) to a control electronics (10) for controlling the generated amount of gas, wherein the gas generation rate (G) depends on the strength of current flowing through the gas generator (8) and the electrical circuit (9), wherein after a short startup phase (I), delivery of lubricant takes place during the entire operating time of the lubricant dispenser (1) and with progressing emptying of the lubricant reservoir (5), the gas generation rate (G) is increased continuously or in steps by the control electronics (10), wherein increasing the gas generation rate (G) during progressing emptying the lubricant reservoir compensates for losses of the propellant gas due to diffusion, so that the lubricant flow rate (S) through the housing outlet (3) can be kept approximately constant, **characterized in that** during a period at the beginning of the operating time, which period is short with regard to the entire operating time, and during progressing emptying of the lubricant reservoir (5), the strength of current flowing through the gas generator (8) and the electrical circuit (9) is increased by the control electronics (10) based on predetermined, defined control parameters.

2. The method according to claim 1, **characterized in that** at the beginning of the lubricant delivery, the maximally achievable current strength is set by the control electronics (10) for the duration of the startup phase (I) so that the gas generation rate (G) is at a maximum.

3. A lubricant dispenser for carrying out the method according to claim 1 or claim 2, with a housing (2) that receives a lubricant reservoir (5) and a gas generation region (7) adjoining the lubricant reservoir (5), with a gas generator (8) arranged in the gas generating region (7), and with a control electronics (10) to which the gas generator (8) is connected via an electrical circuit (9) for controlling the generated amount of gas, wherein predetermined control parameters for controlling the lubricant delivery over the operating time are stored in a memory of the control electronics (10), and wherein the control parameters together with the control electronics (10) effect a continuous lubricant delivery and an increase of the gas generation rate (G) over a period at the beginning of the operating time, which period is short with regard to the entire operating time, and during progressing emptying of the lubricant reservoir (5).

4. The lubricant dispenser according to claim 3, wherein the control electronics (10) is designed as a microcontroller.

5. The lubricant dispenser according to claim 3 or claim 4, wherein the gas generator (8) is designed as current-generating galvanic cell.

6. The lubricant dispenser according to claim 5, wherein the control electronics (10) is supplied by the galvanic cell with the required operating voltage.

7. The lubricant dispenser according to claim 3 or claim 4, wherein the gas generator (8) is connected to a separate voltage supply source, preferably a battery (11) or an accumulator.

## Revendications

1. Procédé destiné à l'utilisation d'un distributeur de lubrifiant (1), qui présente un boîtier avec un réservoir de lubrifiant (5) et une sortie de boîtier (3), une zone de production de gaz (7) voisine du réservoir de lubrifiant (5) ainsi qu'un générateur de gaz (8) disposé dans la zone de production de gaz (7), le générateur de gaz étant raccordé par un circuit électrique (9) à un système électronique de commande (10) pour piloter la quantité de gaz produite, le taux de production de gaz (G) dépendant de l'intensité de courant passant par le générateur de gaz (8) et le circuit électrique (9), une distribution de lubrifiant ayant lieu après une courte phase de démarrage (I) pendant toute la durée d'utilisation du distributeur de lubrifiant (1) et le taux de production de gaz (G) étant augmenté en continu ou progressivement par le système électronique de commande (10) pendant le vidage progressif du réservoir de lubrifiant (5), l'augmentation du taux de production de gaz (G) compensant les pertes de gaz propulseur par diffusion pendant le vidage progressif du réservoir de lubrifiant de sorte que le débit de lubrifiant (S) peut être maintenu à peu près constant par la sortie du boîtier (3), **caractérisé en ce que** pendant une période de temps plus courte se référant à la durée d'utilisation totale, l'intensité de courant passant par le générateur de gaz (8) et le circuit électrique (9) est augmentée par le système électronique de commande (10) au début de la durée d'utilisation et pendant le vidage progressif du réservoir de lubrifiant (5) à l'aide de paramètres de commande établis, préalablement définis.

2. Procédé selon la revendication 1 **caractérisé en ce qu**'au début de la distribution de lubrifiant, l'intensité de courant à atteindre au maximum est réglée pour la durée de la phase de démarrage (I) par le sytème électronique de commande (10) de sorte que le taux de production de gaz (G) soit maximum.

3. Distributeur de lubrifiant destiné à réaliser le procédé selon la revendication 1 ou 2 avec un boîtier (2) qui incorpore un réservoir de lubrifiant (5) et une zone de production de gaz (7) voisine du réservoir de lubrifiant (5), avec un générateur de gaz (8) disposé dans la zone de production de gaz (7) et avec un système électronique de commande (10) auquel le générateur de gaz (8) est raccordé pour piloter la quantité de gaz produite par un circuit électrique (9), des paramètres de commande préalablement définis pour le pilotage de la distribution de lubrifiant pendant le temps d'utilisation étant mémorisés dans une mémoire du système électronique de commande (10) et les paramètres de commande en association avec le système électronique de commande (10) produisent une distribution de lubrifiant continue et une augmentation du taux de production de gaz (G) sur une période de temps plus courte en se référant au temps d'utilisation total au début du temps d'utilisation et pendant le vidage progressif du réservoir de lubrifiant (5).

4. Distributeur de lubrifiant selon la revendication 3, selon lequel le système électronique de commande (10) est constitué comme un microcontrôleur.

5. Distributeur de lubrifiant selon la revendication 3 ou 4 selon lequel le générateur de gaz (8) est constitué comme une cellule galvanique génératrice de courant.

6. Distributeur de lubrifiant selon la revendication 5 selon lequel le système électronique de commande (10) est alimenté par la cellule galvanique avec la tension de fonctionnement nécessaire.

7. Distributeur de lubrifiant selon la revendication 3 ou 4 selon lequel le générateur de gaz (8) est raccordé à une source de tension séparée, de préférence une batterie (11) ou à un accumulateur.
